# EUROPEAN PATENT APPLICATION

(11) **EP 4 671 026 A1**
(43) Date of publication of application: **31.12.2025**
(21) Application number: 25185150.7
(22) Date of filing: 25.06.2025
(51) Int. Cl.: B60K 35/215, B60K 35/22, G01D 13/22, G01D 13/26

(54) **DIGITAL AND ANALOGUE INSTRUMENT FOR A VEHICLE WITH AN INTEGRATED ELECTRIC MOTOR**

(30) Priority: 26.06.2024 IT 202400014698
(71) Applicant: FERRARI S.p.A., 41100 Modena (IT)
(72) Inventor: FERRAZZANO, Antonio, 41100 MODENA (IT); PILICHI, Alessandro, 41100 MODENA (IT); SOSCIA, Salvatore, 41100 MODENA (IT); MORAS, Riccardo, 41100 MODENA (IT)
(74) Representative: Studio Torta S.p.A.

(57) **Abstract**

Digital and analogue instrument (1) for a vehicle and comprising: a digital screen (3); a pointer (2) which is movably mounted to move in front of the digital screen (3); and an actuator device (4) which is configured to move the pointer (2) by transmitting motion to the pointer (2) and comprises an electric motor (5) provided with a stator (6) and a rotor (7) rotatably mounted around a central rotation axis (8). The rotor (7) of the electric motor (5) has a centrally-holed ring shape and is arranged in front of the digital screen (3) SO that the digital screen (3) is visible through a central through hole of the rotor (7). The pointer (2) is integral with the rotor (7) and protrudes cantilevered inwards from the rotor (7).

## Description

### CROSS-REFERENCE TO RELATED APPLICATIONS

This patent application claims priority from Italian patent application no. 102024000014698 filed on June 26, 2024, the entire disclosure of which is incorporated herein by reference.

### TECHNICAL FIELD

The present invention relates to a digital and analogue instrument for a vehicle, namely to an instrument that is defined as *"phygital"* (a crasis between *"physical"* and *"digital")* as it combines the physical presence of a pointer with the digital dimension of a digital screen.

### STATE OF THE ART

Patent application EP4365002A2 discloses a digital and analogue instrument comprising a digital screen, a pointer that can be arranged over the digital screen and is movably mounted to move over the digital screen, and an actuator device configured to move the pointer over the digital screen.

According to a possible embodiment described in patent application EP4365002A2, the actuator device is configured to move the pointer by transmitting motion to the pointer via a contactless magnetic coupling; in particular, the actuator device comprises a motorized slider which is arranged behind the digital screen (i.e. on the opposite side of the digital screen with respect to the pointer), is aligned to the pointer and magnetically attracts the pointer to itself (i.e. the slider supports a permanent magnet which is adapted to generate a magnetic field to magnetically attract the pointer). The actuator device described above allows the pointer to be moved only with relatively limited speed and acceleration so as not to risk losing the magnetic connection between the motorized slider and the pointer; consequently, the actuator device allows the pointer to be used only to indicate the value of physical quantities that change relatively slowly.

According to a different embodiment described in patent application EP4365002A2, the actuator device comprises a support ring which is rotatably mounted and supports the pointer so that rotation of the support ring additionally causes rotation of the pointer and inside the support ring there is an annular rack; the actuator device comprises an electric motor which rotates a pinion that meshes with the annular rack. The actuator device described above allows the pointer to be moved only with relatively limited speeds and accelerations both due to the transmission limits in the coupling between pinion and rack, and to avoid generating too much noise; consequently, the actuator device allows the pointer to be used only to indicate the value of physical quantities that change relatively slowly.

Patent application US2012060747A1 discloses an instrument comprising a screen, a circular piezoelectric element superimposed on the screen, and a rotor supporting a pointer and arranged in proximity to the piezoelectric element and in mechanical communication with the piezoelectric element; a selective excitation of the piezoelectric element generates a mechanical oscillation throughout the piezoelectric element which is similar to ocean waves and causes a displacement of the rotor which is in mechanical communication (direct or indirect) with the piezoelectric element.

Patent application US2018065483A1 discloses a multilayer screen for a vehicle dashboard, wherein a mechanical indicator assembly provided with a rotatable pointer is superimposed with one or more screens.

Patent application US2007040697A1 discloses an analogue instrument for use in a vehicle dashboard and provided with an indicator disc which is rotatably mounted and is rotated by means of a pinion-rack coupling.

Patent DE19537666C2 discloses an instrument provided with a motorized pointer which can rotate on an axis perpendicular to a screen and mounted on the side of the screen facing the observer; the pointer has a magnetic component which can be driven to move about the rotation axis by a magnetic field generated by a rotary drive.

### SUMMARY OF THE INVENTION

Aim of the present invention is to provide a digital and analogue instrument for a vehicle wherein the pointer can be safely moved with high speeds and accelerations in order to be also used to indicate the value of physical quantities that change suddenly.

According to the present invention there is provided a digital and analogue instrument for a vehicle, as claimed in the attached claims.

The claims describe preferred embodiments of the present invention forming an integral part of this description.

### BRIEF DESCRIPTION OF THE FIGURES

The present invention will now be described with reference to the accompanying drawings which illustrate a non-limiting embodiment thereof, wherein:
- Figure 1 is a perspective view, with parts removed for clarity's sake, of a digital and analogue instrument realized according to the present invention; and
- Figure 2 is an exploded perspective view, with parts removed for clarity's sake, of the digital and analogue instrument of Figure 1.

### DETAILED DESCRIPTION OF THE EMBODIMENTS

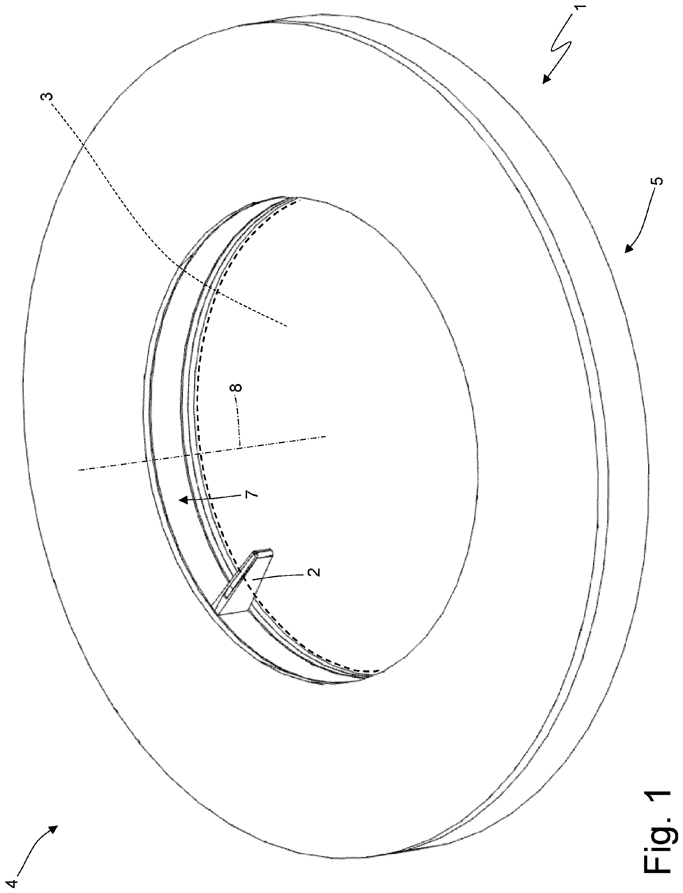

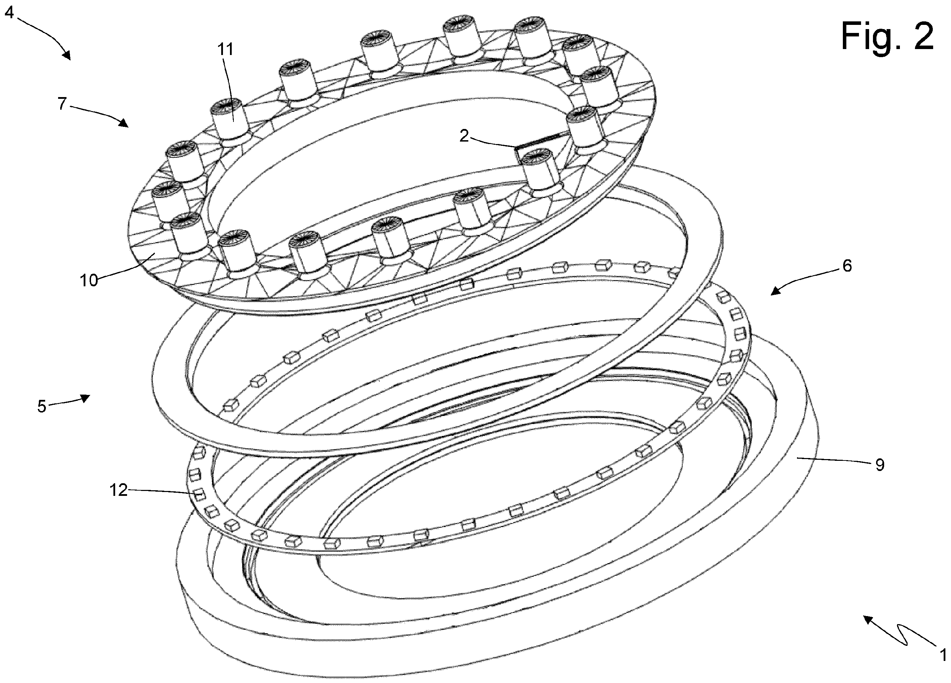

In Figure 1, number 1 denotes as a whole a digital and analogue instrument for the dashboard of a vehicle (in particular of a car). The digital and analogue instrument 1 is defined as *"phygital"* (crasis between *"physical"* and *"digital"*) as it combines the physical presence of a pointer 2 with the digital dimension of a digital screen 3 (schematically shown in Figure 1 and not shown for clarity's sake in Figure 2).

In other words, the digital and analogue instrument 1 comprises the digital screen 3 (for example realized with LED technology or OLED technology) and the pointer 2 which is arranged in front of (above) the digital screen 3 to overlap (when necessary) the digital screen 3. In the embodiment shown in the accompanying figures, the digital screen 3 is circular (round) in shape, but according to other not-shown embodiments the digital screen 3 may have a different shape such as, for example, a rectangular or square shape.

The pointer 2 is movably mounted to move (when necessary) in front of (above) the digital screen 3 to indicate an information displayed by the digital screen 3. According to other not-shown embodiments, the number and arrangement of the pointers 2 may be different and for example two or more pointers 2 may be coupled to the same digital screen 3.

According to the embodiment shown in the accompanying figures, the pointer 2 has a visible part (i.e. which overlaps the digital screen 3) which extends from the edge of the digital screen 3 towards the centre of the digital screen 3; i.e. the pointer 2 has a peripheral positioning as its visible part starts from the rim (from the periphery) of the digital screen 3.

The digital and analogue instrument 1 comprises an actuator device 4 which is configured to move the pointer 2 in front of (above) the digital screen 3 and directly supports the pointer 2. In particular, according to what shown in Figure 2, the actuator device 4 comprises a rotary electric motor 5 provided with a stator 6 and with a rotor 7 rotatably mounted about a central rotation axis 8 (shown in Figure 1) perpendicular to the plane of the digital screen 3.

The rotor 7 of electric motor 5 has a centrally-holed ring shape and is arranged in front of (above) the digital screen 3 so that the digital screen 3 is visible through a central through hole of the rotor 7 (as shown in Figure 1). Moreover, the pointer 2 is integral with the rotor 7 and protrudes cantilevered and inwards from the rotor 7 in order to be arranged in front of (above) the digital screen 3 and therefore the pointer 2 carried by the rotor 7 is located in front of (above) the digital screen 3 (i.e. it overlaps the digital screen 3). The rotation of rotor 7 about rotation axis 8 also causes rotation of the pointer 2 about the rotation axis 8 and thus causes the rotary movement of pointer 2 in front of (above) the digital screen 3.

According to a preferred embodiment better shown in Figure 2, the front rotor 7 is inserted inside a containing ring 9 which is stationary (i.e. it is fixed to a frame of the digital and analogue instrument 1) and coaxial to rotor 7 so that the rotor 7 is free to slide (i.e. rotate about rotation axis 8) with respect to the containing ring 9. In other words, the containing ring 9 has, inside itself, an annular seat which accommodates in slidable manner the rotor 7 in order to allow the rotor 7 to slide (i.e. rotate about rotation axis 8) with respect to the containing ring 9.

To reduce friction between the rotor 7 and the containing ring 9, the lateral surface of rotor 7 and/or the lateral surface of containing ring 9 are coated with a low-friction coating for example made of PTFE (polytetrafluoroethylene) or DLC (Diamond Like Carbon).

According to what shown in Figure 2, the rotor 7 is a permanent magnets rotor and comprises a centrally-holed annular-shaped ferromagnetic core 10 and a plurality of permanent magnets 11 integral with the ferromagnetic core 10. Preferably, the permanent magnets 11 are oriented to present their polarities axially arranged, i.e. parallel to rotation axis 8.

According to a different embodiment, the rotor 7 of electric motor 5 can lack the permanent magnets.

In general, the rotor 7 of electric motor 5 lacks contact points with the stator 6 of electric motor 5 as the transmission of a driving torque from the stator 6 of electric motor 5 to the rotor 7 of electric motor 5 occurs via interaction of magnetic fields. That is to say, the transmission of the driving torque occurs thanks to the magnetic interaction between stator 6 and rotor 7, without direct contact between the two parts. In induction electric motors 5, this occurs via induced magnetic fields, while in synchronous electric motors 5 and in direct current electric motors 5 it is based on static magnetic fields or magnetic fields generated by powered windings.

According to what shown in Figure 2, the stator 6 comprises a stator winding 12 configured to generate a rotating magnetic field when it is powered with electric current.

According to a possible embodiment, the stator 6 comprises a printed circuit board in which there are printed flat coils that form part of the stator winding 12. According to a different embodiment, the stator 6 comprises a printed circuit board in which there are welded coils that form part of the stator winding 12. According to a further, more traditional embodiment, the stator 6 comprises a ferromagnetic core into which there are inserted coils that form part of the stator winding 12.

According to a possible embodiment, the digital and analogue instrument 1 comprises at least one circular-shaped light guide which is arranged behind the pointer 2 and directs a light beam in axial direction towards the pointer 2 to illuminate the same pointer 2; i.e. the pointer 2 receives from the light guide the light beam which the pointer 2 reflects towards the user to be illuminated.

According to a possible embodiment, there are provided two semicircular-shaped light guides which are arranged in a complementary manner to form overall a circle and receive light from two respective LED illuminators (i.e. each semicircular-shaped light guide receives light from a respective LED illuminator). Preferably, the digital and analogue instrument 1 comprises an annular cover (shown in Figure 1) shaped to cover the rotor 7 and the light guide while leaving in sight only a part of pointer 2 that protrudes more inwardly than the rotor 7 and the light guide; in this way from outside the user sees only the pointer 2 overlapped to the digital screen 3.

In the embodiment shown in the accompanying figures, the entire electric motor 5 (comprising the stator 6 and the rotor 7 supporting the pointer 2) is arranged in front of (above) the digital screen 3 and has centrally-holed annular shape so that the digital screen 3 is visible through a central through hole of the electric motor 5. According to a not-shown alternative embodiment, only the rotor 7 has a centrally-holed annular shape and the digital screen 3 is arranged behind the rotor 7 and in front of the stator 6, i.e. the stator 6 is arranged behind the digital screen 3 to be on the opposite side of the digital screen 3 with respect to the rotor 7 and therefore the digital screen 3 is interposed between the rotor 7 and the stator 6.

The digital screen 3 is realized so as to be insensitive to the magnetic field (i.e. so as not to be influenced by the rotating magnetic field generated by the stator winding 12 and by the magnetic field generated by the permanent magnets 11).

The embodiments herein described can be combined with each other without departing from the scope of protection of the present invention.

The digital and analogue instrument 1 described above finds advantageous application in any type of road vehicle (for example a car or a motorcycle) and also in any type of non-road vehicle.

The digital and analogue instrument 1 described above has numerous advantages.

Firstly, the digital and analogue instrument 1 described above allows the pointer 2 to be safely moved with high speeds and accelerations and therefore can be used to also indicate the value of physical quantities that change suddenly.

Moreover, the digital and analogue instrument 1 described above has particularly small overall dimensions and can therefore be integrated into any type of vehicle dashboard.

Finally, the digital and analogue instrument 1 described above has relatively low production costs as it uses simple components that are readily available on the market.

### LIST OF REFERENCE NUMBERS IN THE FIGURES

- 1: digital and analogue instrument
- 2: pointer
- 3: digital screen
- 4: actuator device
- 5: electric motor
- 6: stator
- 7: rotor
- 8: axis of rotation
- 9: containing ring
- 10: Ferromagnetic core
- 11: permanent magnets
- 12: stator winding

## Claims

1. Digital and analogue instrument (1) for a vehicle and comprising:
a digital screen (3);
a pointer (2) which is mounted in a movable manner so as to move in front of the digital screen (3); and
an actuator device (4) which is configured to move the pointer (2) by transmitting motion to the pointer (2) and comprises an electric motor (5) provided with a stator (6) and with a rotor (7) mounted so as to rotate about a central rotation axis (8);
wherein the rotor (7) of the electric motor (5) has a centrally-holed ring shape and is located in front of the digital screen (3) so that the digital screen (3) is visible through a central through hole of the rotor (7); and
wherein the pointer (2) is integral with the rotor (7) and protrudes inwards from the rotor (7);
the digital and analogue instrument (1) is **characterized in that:**
the rotor (7) of the electric motor (5) comprises a centrally holed ferromagnetic core (10) with an annular shape;
the rotor (7) of the electric motor (5) lacks points of contact with the stator (6) of the electric motor (5); and
the transmission of a driving torque from the stator (6) of the electric motor (5) to the rotor (7) of the electric motor (5) occurs via the interaction of magnetic fields.

2. Digital and analogue instrument (1) according to claim 1, wherein the rotor (7) is a permanent magnets rotor and comprises a plurality of permanent magnets (11) integral with the ferromagnetic core (10).

3. Digital and analogue instrument (1) according to claim 2, wherein the permanent magnets (11) are oriented to present their polarities axially arranged, i.e. parallel to the rotation axis (8).

4. Digital and analogue instrument (1) according to claim 1, 2 or 3, wherein the stator (6) comprises a stator winding (12) configured to generate a rotating magnetic field when powered with an electric current.

5. Digital and analogue instrument (1) according to claim 4, wherein the stator (6) comprises a printed circuit board in which there are printed flat coils forming part of the stator winding (12).

6. Digital and analogue instrument (1) according to claim 4, wherein the stator (6) comprises a printed circuit board in which there are welded coils forming part of the stator winding (12).

7. Digital and analogue instrument (1) according to claim 4, wherein the stator (6) comprises a ferromagnetic core into which there are inserted coils forming part of the stator winding (12).

8. Digital and analogue instrument (1) according to one of claims 1 to 7 and comprising a containing ring (9) which is stationary, is coaxial to the rotor (7) and accommodates inside itself the rotor (7) so that the rotor (7) is free to slide with respect to the containing ring (9).

9. Digital and analogue instrument (1) according to claim 8, wherein a lateral surface of the rotor (7) and/or a lateral surface of the containing ring (9) are coated with a low-friction coating.

10. Digital and analogue instrument (1) according to one of claims 1 to 9, wherein the stator (6) is arranged behind the digital screen (3) to be on the opposite side of the digital screen (3) with respect to the rotor (7).

11. Digital and analogue instrument (1) according to one of claims 1 to 10, wherein the digital screen (3) is interposed between the rotor (7) and the stator (6).

12. Digital and analogue instrument (1) according to one of claims 1 to 9, wherein the entire electric motor (5) is arranged in front of the digital screen (3) and has a centrally-holed annular shape so that the digital screen (3) is visible through a central through hole of the electric motor (5).

13. Digital and analogue instrument (1) according to one of claims 1 to 12 and comprising at least one circular-shaped light guide which is arranged behind the pointer (2) and directs a light beam in an axial direction towards the pointer (2) to illuminate the same pointer (2).

14. Digital and analogue instrument (1) according to claim 13 and comprising a cover shaped to cover the rotor (7) and the light guide while leaving in sight only a part of the pointer (2) that protrudes more inwardly than the rotor (7) and the light guide.

15. Digital and analogue instrument (1) according to claim 13 or 14 and comprising two semicircular-shaped light guides that are arranged in a complementary manner.
